# EUROPÄISCHE PATENTSCHRIFT

(11) **EP 1 582 393 B1**
(45) Veröffentlichungstag und Bekanntmachung des Hinweises auf die Patenterteilung: **02.07.2008**
(21) Anmeldenummer: 05005948.4
(22) Anmeldetag: 18.03.2005
(51) Int. Cl.: B60K 35/00, B60K 37/06

(54) **Fahrerinformationssystem**
Driver information system
Système d'information de conducteur

(30) Priorität: 29.03.2004 DE 102004015715; 08.03.2005 DE 102005011094
(43) Veröffentlichungstag der Anmeldung: 05.10.2005
(73) Patentinhaber: Volkswagen Aktiengesellschaft, 38436 Wolfsburg (DE)
(72) Erfinder: Hofmann, Gustav, 38114 Braunschweig (DE); Hofmann, Robert, 10777 Berlin (DE); Medler, Andreas, 38268 Lengede (DE); Michaelis, Frank, 38102 Braunschweig (DE); Bauer, Michael, 38102 Braunschweig (DE); Fürstnow, Thomas, 38104 Braunschweig (DE); Kuhn, Mathias, 14059 Berlin (DE)
(74) Vertreter: Meyer, Enno

(56) Entgegenhaltungen:
- EP-A- 1 029 731
- DE-A1- 10 205 641
- DE-A1- 19 944 324
- FR-A- 2 727 559
- US-A- 5 847 704
- US-A1- 2002 085 043
- US-B1- 6 650 345

## Beschreibung

Die Erfindung betrifft ein Fahrerinformationssystem für ein Kraftfahrzeug.

Gattungsgemäße Fahrerinformationssysteme für Kraftfahrzeuge sind allgemein bekannt und werden in verschiedenen Fahrzeugen bereits eingesetzt.

So ist beispielsweise in der DE-A-199 44 324 eine Multifunktionsbedienvorrichtung zum Einbau in ein Fahrzeug beschrieben, die einen Drehschalter zur Auswahl von Funktionen aufweist, die innerhalb eines Anzeigefeldes auf einer Monitoreinheit darstellbar sind. Der Drehschalter ermöglicht so die Auswahl einer Funktion aus einer Anzahl von Funktionen. Um den Drehschalter sind haptisch unterscheidbare Druckschalter angeordnet, denen ebenfalls Anzeigefelder auf der Monitoreinheit zugeordnet sind. Diese Zuordnung ist so gestaltet, dass die Anordnung der den Druckschaltern zugeordneten Anzeigefelder auf der Monitoreinheit zumindest schematisch der Anordnung der Druckschalter entspricht. Mit Hilfe der den Druckschaltern zugeordneten Anzeigefeldern auf dem Monitor ist es dem Benutzer möglich, unabhängig von den dargestellten Funktionen, die mit dem Druckschalter anwählbar sind, Funktionen anzuwählen, die in den den Druckschaltern zugeordneten Anzeigefeldern angezeigt werden. Dies können vor allem Funktionen sein, die sehr häufig gewählt werden oder die den auf dem dem Drehschalter zugeordneten Anzeigefeld dargestellten Funktionen übergeordnet sind. Die Anordnung von Druckschaltern um einen Drehschalter herum ist ergonomisch günstig, da der Benutzer den gewünschten Druckschalter ausgehend von dem Drehschalter ohne Kontrollblick auf die Monitoreinheit ertasten und betätigen kann, ohne dass andere Druckschalter mit dem Finger überfahren werden müssen, wodurch ein fehlerhaftes Drücken eines anderen Druckschalters verhindert wird. Ein Blick auf die Monitoreinheit ist lediglich dafür notwendig, eine Information darüber zu erhalten, welcher Druckschalter mit der gewünschten Funktion belegt ist.

Eine Realisierung der in der oben genannten Druckschrift beschriebenen Multifunktionsbedienvorrichtung als gattungsgemäßes Fahrerinformationssystem kommt in der derzeitigen Limousine A8 sowie der neuen Limousine A6 der Audi AG zum Einsatz und wird auch als Multi Media Interface (MMI) bezeichnet. Eine Beschreibung des MMI-Systems des Audi A8 ist im Internet unter der Adresse www.audi.com/de/de/neuwagen/a8 zu finden. Ferner ist das MMI-System der zweiten Generation in der Zeitschrift "Auto-Motor-Sport": Heft 5, 2004, Seite 2004, für den Audi A6 beschrieben.

Die Hauptfunktionen des im A8 und A6 eingesetzten MMI-Systems sind:
- Entertainment: Bedienung von Radio und CD/TV,
- Kommunikation: Bedienung des Telefons,
- Information: Abruf und Einstellungen von Verkehrsinformationen und dynamischer Zielführung der Navigation
- Steuerung: Fahrzeugeinstellungen und Setup-Einstellungen der Infotainment-Komponenten.

Ein wesentliches Merkmal des bekannten MMI-Systems ist, dass sich der Fahrer für die Bedienung aller Infotainment-Komponenten und Fahrzeugeinstellungen lediglich vier Punkte zu merken braucht, nämlich:
1) Alle Hauptfunktionen werden über acht Funktionstasten angewählt,
2) Auswahl und Aktivierung von Unterfunktionen erfolgen durch Drehen und Drücken des Steuerungsknopfes,
3) in 4 Ecken des MMI-Displays werden aktuelle Funktionen der 4 Steuerungstasten direkt angezeigt, und
4) eine Return-Taste führt zurück zur übergeordneten Ebene.

Der nächstliegende bekannt gewordene Stand der Technik ist zu finden in US-A-5 847 704.

Der Erfindung liegt daher die Aufgabe zugrunde, das gattungsgemäße Fahrerinformationssystem durch eine verbesserte Menü-Führung weiter zu optimieren.

Diese Aufgabe wird durch ein Fahrerinformationssystem mit den Merkmalen des Anspruchs 1 gelöst. Bevorzugte Ausgestaltungen der Erfindung sind Gegenstand der Unteransprüche.

Das erfindungsgemäße Fahrerinformationssystem weist eine Bedieneinheit mit einer Mehrzahl von Funktionselementen zur Auswahl von Hauptfunktionen, einer Mehrzahl von Steuerungselementen zur Auswahl von Funktionen einer Hauptfunktion, einem Auswahlelement zur Auswahl von Unterfunktionen der Funktionen und einem Returnelement zur Rückkehr zur übergeordneten Ebene auf, und weist eine Anzeigeeinheit zur Darstellung von Informationen auf, wobei das System weiter eine Mehrzahl von Darstellungsmoden zur Darstellung von fahrzeugspezifischen und/oder bedieneinheitsbezogenen Informationen auf der Anzeigeeinheit aufweist. Unter bedieneinheitsbezogenen Informationen werden solche verstanden, die sich aus den Hauptfunktionen, sowie den Funktionen und deren Unterfunktionen, die den Hauptfunktionen zugeordnet sind, und deren Auswahl ergeben. Fahrzeugspezifische Informationen sind beispielsweise Geschwindigkeit und Drehzahl.

Vorzugsweise weist das System drei Darstellungsmoden auf, wobei insbesondere die Anzeigeeinheit als Kombiinstrument dient. In diesem Fall, d.h. wenn die Anzeigeeinheit als Kombiinstrument ausgelegt ist, weist jeder Darstellungsmodus vorzugsweise eine Geschwindigkeitsanzeige und eine Drehzahlanzeige auf. Je nach Anwendung können auch mehr oder weniger als drei Darstellungsmoden vorgesehen sein.

Die Geschwindigkeitsanzeige und die Drehzahlanzeige sind in der Darstellung als Rundinstrumente ausgelegt. In diesem Fall können im Innern des einen Rundinstruments fahrzeugrelevante Daten und im Innern des anderen Rundinstruments Daten von Fahrerassistenzeinrichtungen angezeigt werden. Die Darstellung dieser jeweiligen Daten wird vorzugsweise durch entsprechende Betätigungselemente veranlasst, die bevorzugt am Lenkstockschalter angeordnet sind.

Vorzugsweise weist der erste Darstellungsmodus neben den Anzeigen für die Geschwindigkeit und Drehzahl eine Zeitanzeige auf, die auch hier insbesondere in Form eines Rundinstruments ausgelegt ist. Bevorzugt ist die Zeitanzeige zwischen den Anzeigen für Geschwindigkeit und Drehzahl angeordnet. Weiter bevorzugt weisen im ersten Darstellungsmodus die Anzeigen für Drehzahl und Geschwindigkeit einen gemeinsamen ersten Durchmesser auf, der größer ist als der Durchmesser der Zeitanzeige in Form eines Rundinstruments.

In einem zweiten Anzeigemodus ist zwischen den beiden Rundinstrumenten für Geschwindigkeit und Drehzahl mit erstem Durchmesser eine Anzeige einer Darstellung der ausgewählten Hauptfunktion mit den gegebenenfalls dazu gehörigen Funktionen und daraus resultierenden bzw. notwendigen Unterfunktionen angeordnet.

Vorzugsweise weisen im dritten Anzeigemodus die Rundinstrumente für Geschwindigkeit und Drehzahl einen zweiten Durchmesser auf, der kleiner als der erste Durchmesser im ersten und zweiten Darstellungsmodus ist. Ferner sind die beiden Rundinstrumente jeweils am Rand der Anzeige angeordnet und zwischen den beiden Rundinstrumenten ist eine Anzeige der Darstellung der ausgewählten Hauptfunktion mit den dazu gehörigen Funktionen und notwendigen Unterfunktionen angeordnet, wobei die Darstellung dieser bedieneinheitsbezogenen Informationen größer und ausführlicher ist als im zweiten Darstellungsmodus.

Vorzugsweise ist ein Kombi-Bedienelement zur Umschaltung zwischen mindestens zwei Darstellungsmoden vorgesehen, wobei das Kombi-Bedienelement insbesondere zwischen zweiten und dritten Darstellungsmodus umschalten kann. Es ist auch möglich, das Kombi-Bedienelement so auszulegen, dass es zwischen sämtlichen Darstellungsmoden umschalten kann.

Vorzugsweise weist das System acht Funktionselemente für maximal acht Hauptfunktionen auf, wobei jeder Hauptfunktion maximal 4 Funktionen untergeordnet sein können, die durch vier Steuerungselemente ausgewählt werden, wobei die Steuerungselemente mit den Funktionen der ausgewählten Hauptfunktion belegt sind.

Insbesondere weist das System sieben Hauptfunktionen mit jeweils vier Funktionen auf, die durch sieben der acht Funktionselemente realisiert werden, wobei das achte Funktionselement beispielsweise mit einer Bedienfunktion der ausgewählten Hauptfunktion oder mit der direkten Kanal- und Medienumschaltung des Audio-Systems belegt sein kann.

Die Hauptfunktionen können durch die Elemente "Navigation", "Information", "Fahrzeug", "Telefon", "Audio", "Video" und "Einstellungen" gebildet werden

Vorzugsweise wird das Auswahlelement durch einen Dreh-/Druckschalter gebildet, beispielsweise in der Form eines Trackballs oder eines Bedienelements, wie dies in den Druckschriften DE-A-10140505 oder DE-A-10042028 geschildert ist.

Vorzugsweise sind die Steuerungselemente durch ein Touchpad mit einer Mehrzahl von Bereichen gebildet. Andere Ausführungen sind jedoch möglich, So können die Funktionselemente und/oder die Steuerungselemente durch Näherungssensoren realisiert werden, so dass bei einer Annäherung an ein Funktionselement die entsprechende Hauptfunktion auf der Anzeige dargestellt wird, bzw. bei einer Annäherung an ein Steuerungselement die entsprechende Funktion mit ihren Unterfunktionen eingeblendet wird. Derartige Näherungssensoren auf optischer Basis sind aus der Druckschrift DE-A-10211307 bekannt.

Es ist auch möglich, dass die Sensoren der Funktions- und/oder Steuerelemente auf Berührung reagieren und bewirken, dass die entsprechende Repräsentanz des Bedienelements am Bildschirm hervorgehoben wird, aber erst durch mechanisches Betätigen des Tasters, d.h. des Funktions- bzw. Steuerelements die damit verbundene Funktion aufgerufen wird. Ein derartiges Verhalten kann beispielsweise durch kapazitive Sensoren erreicht werden, die auf direkte Berührung der Oberfläche reagieren.

Sowohl mit den Näherungssensoren als auch mit den berührsensitiven Sensoren kann der Fahrer, ohne den Blick aus der Fahrtrichtung abzuwenden, die Position der Funktions- oder Steuerungselemente ertasten - haptisches Feedback - und gleichzeitig am Bildschirm die Beschriftung der entsprechenden Taste ablesen - visuelles Feedback.

Ferner kann das System mindestens eine weitere, durch einen Monitor gebildete Anzeige aufweisen, die beispielsweise zur Darstellung von Videos etc. für den Beifahrer während der Fahrt dienen.

Vorzugsweise weist die Anzeigeeinheit des Fahrerinformationssystems einen unter einem Winkel angeordneten halbdurchlässigen Spiegel auf, wobei in Blickrichtung des Fahrers hinter dem halbdurchlässigen Spiegel ein Display, vorzugsweise ein TFT-Display, angeordnet ist und in der gespiegelten Blickrichtung des Fahrers physikalische Rundinstrumente für Drehzahl und Geschwindigkeit angeordnet sind.

Bevorzugt sind die physikalischen Rundinstrumente unterhalb des geneigten halbdurchlässigen Spiegels angeordnet.

Vorzugsweise entspricht der Durchmesser der physikalischen Rundinstrumente dem zweiten Durchmesser, wobei die physikalischen Rundinstrumente so angeordnet sind, dass sie am Rand des für den Fahrer sichtbaren Anzeigebereichs eingespiegelt werden. Bevorzugt sind die physikalischen Rundinstrumente mit einer Beleuchtungseinrichtung versehen. Weiter bevorzugt ist die Beleuchtung der physikalischen Rundinstrumente nur im dritten Darstellungsmodus eingeschaltet, wodurch die seitlichen angeordneten Rundinstrumente mit zweitem Durchmesser für den Fahrer sichtbar sind.

Mit anderen Worten, im ersten und zweiten Darstellungsmodus in dieser Ausführungsform des Fahrerinformationssystems sind die physikalischen Rundinstrumente für den Fahrer nicht sichtbar und die Rundinstrumente mit dem ersten, größeren Durchmesser werden von hinter dem Spiegel angeordneten Display erzeugt. Nur im dritten Darstellungsmodus sind die physikalischen Rundinstrumente für den Fahrer am Rand des sichtbaren Bereichs sichtbar, wobei die detaillierte Information in der Mitte der Anzeige, wie beispielsweise Landkarten, vom Display erzeugt werden.

Bevorzugte Ausführungsformen der Erfindung werden nachfolgend anhand der Zeichnungen erläutert.
- Fig. 1: zeigt das erfindungsgemäße Fahrerinformationssystem in schematischer Darstellung,
- Fig. 2: zeigt den ersten Darstellungsmodus des Fahrerinformationssystems,
- Fig. 3: zeigt den zweiten Darstellungsmodus des Fahrerinformationssystems,
- Fig. 4: zeigt den dritten Darstellungsmodus des Fahrerinformationssystems,
- Fig. 5: zeigt das Fahrerinformationssystem mit der Auswahl der Hauptfunktion "Audio",
- Fig. 6: zeigt die Auswahl der Funktion "Radio" innerhalb der Hauptfunktion "Audio",
- Fig. 7: zeigt die Auswahl der Unterfunktion "Band" bei der Funktion "Radio", und
- Fig. 8: zeigt die Darstellung nach Auswahl der Hauptfunktion "Telefon".
- Fig. 9: zeigt in schematischer Ansicht eine Realisierung der Anzeigeeinheit mit einem halbdurchlässigen Spiegel.

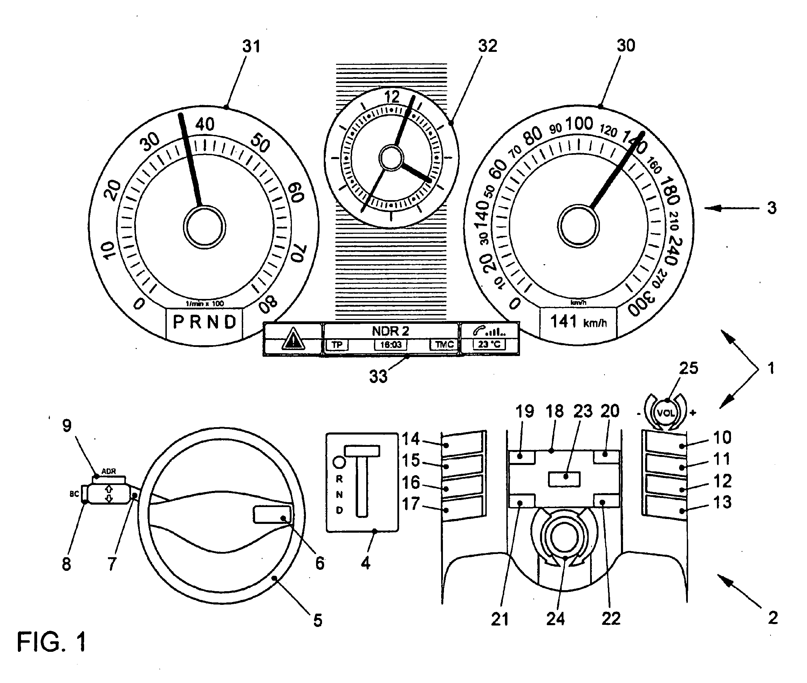

Fig. 1 zeigt das erfindungsgemäße Fahrerinformationssystem 1, bestehend aus einer Bedieneinheit 2 und einer Anzeigeeinheit 3 in schematischer Darstellung. Ferner ist in Fig. 1 eine Automatik-Schaltung 4 mit den üblichen Positionen P, R, N, und D, ein Lenkrad 5 mit einem Kombi-Bedienschalter 6, sowie ein Lenkstockschalter 7 mit Bedienelementen 8 und 9 dargestellt. Die Funktionen der Bedienelemente 8, 9 sowie des Kombi-Bedienschalters 6 werden später erläutert werden.

Die Bedieneinheit 2 des Fahrerinformationssystems umfasst in dieser Ausführungsform acht Funktionselemente 10 bis 17, mit denen die zu steuernden bzw. auszuwählenden Hauptfunktionen realisiert werden. Es sind dies das Funktionselement 11 "Audio"; mit dem die Audio-Komponenten des Fahrzeugs vom Fahrer gesteuert werden, das Funktionselement 12 "Video", mit dem die Video-Komponente des Fahrzeugs gesteuert wird, das Funktionselement 13 "Setup" zur Einstellung der Video, DVD und TV-Eigenschaften, das Funktionselement 14 "Navigation" zur Bedienung des Navigationssystems, das Funktionselement 15 Info" zur Wiedergabe von Informationen, Abfrage und Verbindung mit verschiedensten Informationsdienste wie beispielsweise Telefondienste, Telematikdienste, Internetzugang etc., das Funktionselement 16 "Car" zur Abfrage von Fahrzeugdaten und Einstellung von Fahrzeugkomponenten, beispielsweise der Federung etc., und das Funktionselement 17 " Telefon" zum Bedienen des Telefons. Ferner gibt es noch das Funktionselement 10, welches direkt auf die Audio-Komponente wirkt und zur Umschaltung zwischen den programmierten Kanälen und den verfügbaren CDs dient und wobei das Funktionselement 10 im funktionellen Zusammenhang mit dem Lautstärkeregler 25 steht, der ebenfalls direkt auf die Audio-Komponente wirkt. Die Pfeile am Lautstärkeregler 25 zeigen mittels "+" und "-" die Drehrichtung für eine lautere oder eine leisere Einstellung der Audio-Komponente an.

Zu jeder Hauptfunktion sind vier Unterfunktionen definiert, die über die Steuerungselemente 19 bis 22 der Steuerungselementkonsole 18 zugänglich sind. Durch die Anwahl eines Steuerungselements werden Unterfunktionen in der Anzeige aufgeblendet, die durch den Dreh-/Drückschalter 24 ausgewählt und angewählt, d.h. aktiviert, werden können. Weiterhin weist die Steuerungselementkonsole 18 ein Return-Element 23 auf, dessen Betätigung zurück zur nächsthöheren Bedienebene führt.

Die Anzeigeeinheit 3, die durch einen geeigneten Monitor, beispielsweise ein TFT-Monitor, gebildet wird und die sich in Fig. 1 im ersten Darstellungsmodus befindet, umfasst ein Rundinstrument 30 zur Darstellung der gegenwärtigen Geschwindigkeit sowie ein Rundinstrument 31 zur Darstellung der aktuellen Drehzahl des Motors. Zwischen den beiden Rundinstrumente 30, 31 für die Geschwindigkeit und Drehzahl, die beide auf einer Linie angeordnet sind und einen gleichgroßen ersten Durchmesser aufweisen, ist erhöht ein drittes Rundinstrument 32 mit kleinerem Durchmesser zur Darstellung der Zeit, d.h. eine Uhr, angeordnet. Weiterhin umfasst die Anzeige 3 im ersten Darstellungsmodus eine am unteren Rand der Anzeige angeordnete Informationsleiste 33, die den Fahrer über den eingestellten Sender, die Außen- und/oder Innentemperatur und weitere fahrzeugrelevante Daten informiert.

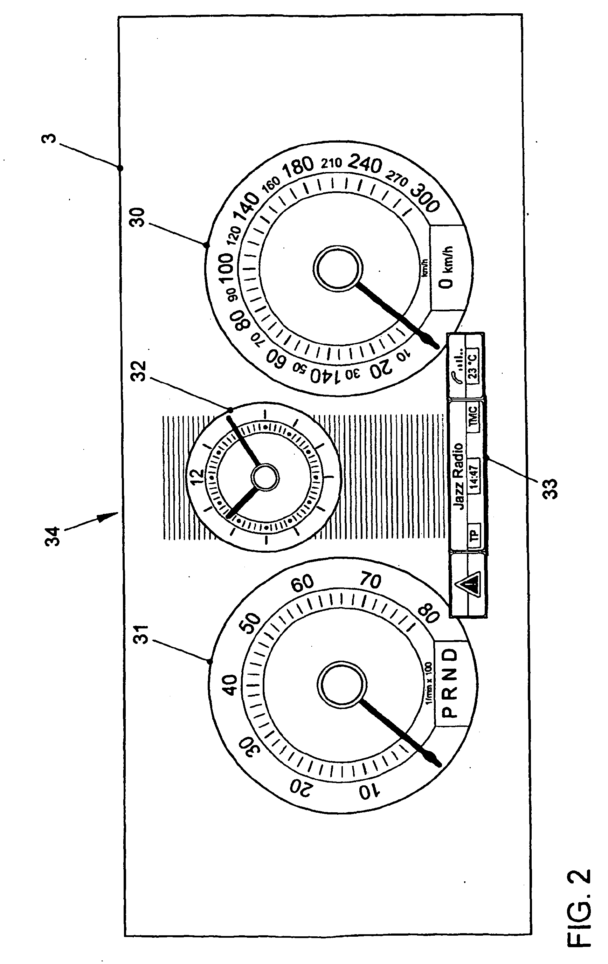

Fig. 2 zeigt den bereits in Fig. 1 dargestellten ersten Darstellungsmodus des Systems auf der durch einen Monitor gebildeten Anzeigeeinheit 3, darstellend die sich auf einer Linie befindlichen Rundinstrumente 30, 31 für Geschwindigkeit und Drehzahl, das Rundinstrument 32 für die Uhr mit kleinerem Durchmesser als der erste Durchmesser der beiden anderen Rundinstrumente 30, 31, sowie die Informationsleiste 33. Die Uhr 32 ist dabei in einem mittleren Anzeigebereich 34 angeordnet. Wie aus der Fig. 2 ersichtlich, ist der Monitor in seinen linken und rechten Außenbereichen in dem ersten Darstellungsmodus unbenutzt.

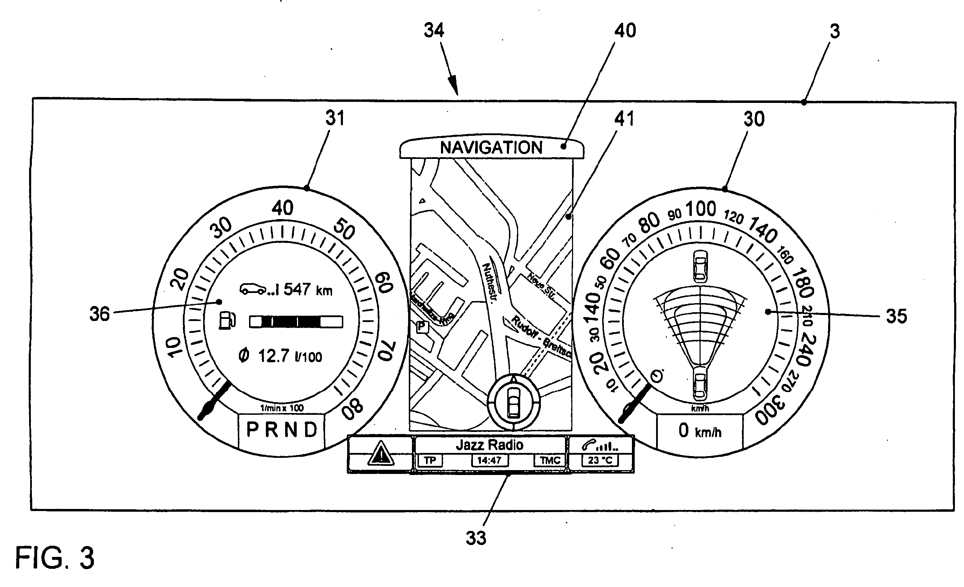

Fig. 3 zeigt den zweiten Darstellungsmodus des Fahrerinformationssystems. Der zweite Darstellungsmodus weist die Rundinstrumente 30, 31 für Geschwindigkeit und Drehzahl mit dem ersten Durchmesser auf. In dem Bereich, der im ersten Darstellungsmodus von der Uhr eingenommen wurde auf, d.h. im mittleren Anzeigebereich 34, ist im zweiten Darstellungsmodus die ausgewählte Hauptfunktion, hier die Hauptfunktion "Navigation" 40, mit der entsprechende gewählten Funktion und/oder Unterfunktion eingeblendet. In der Fig. 3 handelt es sich dabei um die Funktion "Karte" 41 mit einer entsprechenden Darstellung der Landkarte, die das aktuelle Umfeld des Fahrzeugs anzeigt. Die Informationsleiste 33 ist im zweiten Darstellungsmodus ebenfalls eingeblendet. Ferner ist im Innern des Rundinstruments 30 zur Darstellung der Geschwindigkeit, d.h. auf der inneren Darstellungsfläche 35, Daten eines Fahrerassistenzsystems, im vorliegenden Fall eine Darstellung des ADR-Systems des Fahrzeugs (ADR = automatische Distanzregelung) eingeblendet. Im Innern 36 des anderen Rundinstruments 31, d.h. auf der inneren Darstellungsfläche 36, sind Daten dargestellt, die das Fahrzeug betreffen, beispielsweise die seit dem letzten Tanken zurückgelegte Strecke, der Tankinhalt und der durchschnittliche Treibstoffverbrauch.

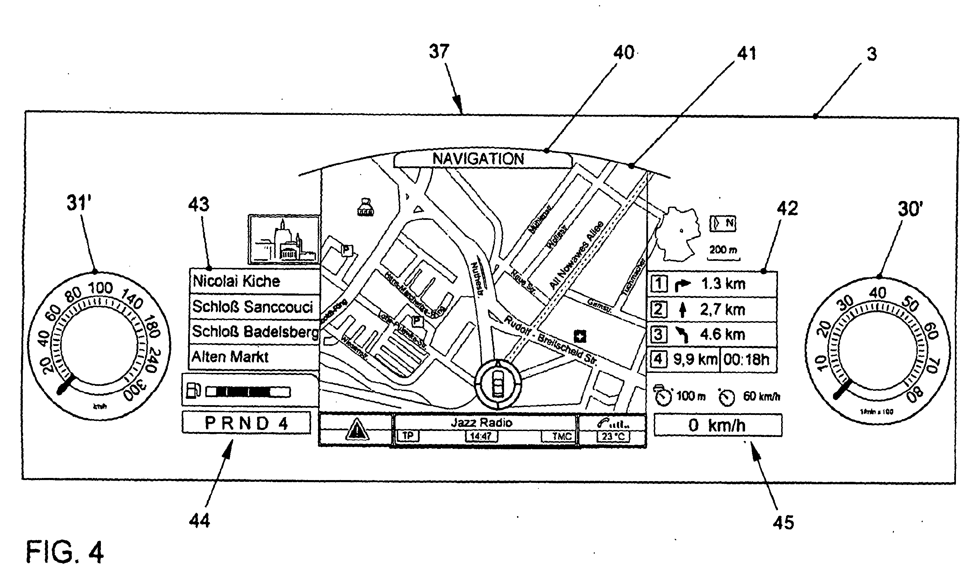

Fig. 4 zeigt den dritten Darstellungsmodus des Fahrerinformationssystems. Hier sind die beiden Rundinstrumente 30, 31 für Geschwindigkeit und Drehzahl an den Rand der Anzeige 3 gerückt und weisen ein zweiten Durchmesser auf, der kleiner als der erste Durchmesser in dem ersten oder zweiten Darstellungsmodus ist. Die Darstellungsflächen im Innern der Rundinstrumente 30, 31 sind in Fig. 4 leer, da die Darstellungen zu klein geraten würden. Durch das Anordnen der Rundinstrumente 30, 31 in den linken und rechten Randbereichen der Anzeige 30 ist in der Mitte der Anzeige 3 durch den vergrößerten mittleren Anzeigebereich 37 Platz für eine vergrößerte Darstellung der Karte 41 der Hauptfunktion "Navigation" 40. Ferner ist durch den vergrößerten mittleren Anzeigebereich 37 Platz für die Darstellung weiterer Informationen, wie ein Fahrzeug-Leitsystem 42 und eine Anzeige 43 von Sehenswürdigkeiten oder Ähnlichem. Die fahrzeugspezifischen Informationen, wie Tankinhalt und Gangwahl, sind in einem Anzeigebereich 45 unter der Anzeige 43 der Sehenswürdigkeiten angeordnet, während unter der Anzeige des Fahrzeug-Leitsystems 42 eine fahrerassistenzsystemspezifische Anzeige 46 angeordnet ist.

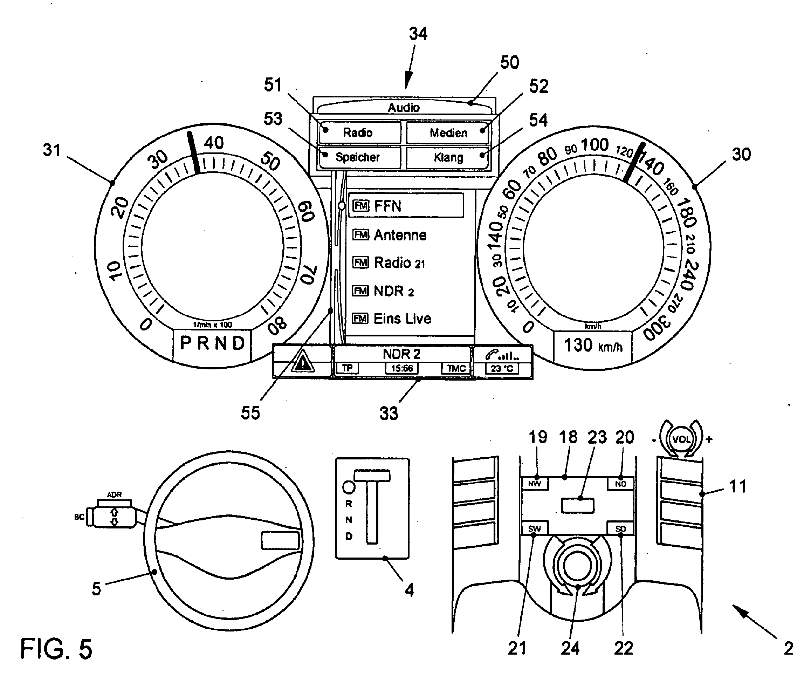

Fig. 5 zeigt wie Fig. 1 das gesamte System in schematischer Darstellung, bestehend aus der Bedieneinheit 1 sowie der Anzeige 2. Mit den Figuren 5 bis 7 soll beispielhaft anhand der Hauptfunktion "Audio" die Anordnung und logischen Abhängigkeiten der verschiedenen Bedienebenen aufgezeigt werden. Ferner sind schematisch das Lenkrad 5 sowie die Automatik-Schaltung 4 dargestellt. Im mittleren Bereich 34 wird durch die Betätigung des Funktionselement 11 die Hauptfunktion "Audio" 50 mit den damit verbundenen Funktionen "Radio" 51, "Medien" 52, "Speicher" 53 und "Klang" 54 eingeblendet. Die genannten Funktionen sind durch die Anwahl des Funktionselements 11 mit den Steuerungselementen NW 19, NO 20, SW 21 und SO 22 verbunden, so das eine räumliche Kohärenz gegeben ist. Ferner wird mit der Betätigung des Funktionselements 11 eine Sender-/Medienliste 55 aufgeblendet, wobei die aufgeführten Sender oder Medien über den Dreh-/Drückschalter 24 durch die durch die Pfeile dargestellte Drehfunktion ausgewählt und durch die Drückfunktion angewählt werden können. Dabei ist die dargestellte Liste nicht vollständig, sondern über die Drehfunktion des Schalters 24 wird auch eine Scroll-Funktion in üblicher Weise ausgeführt.

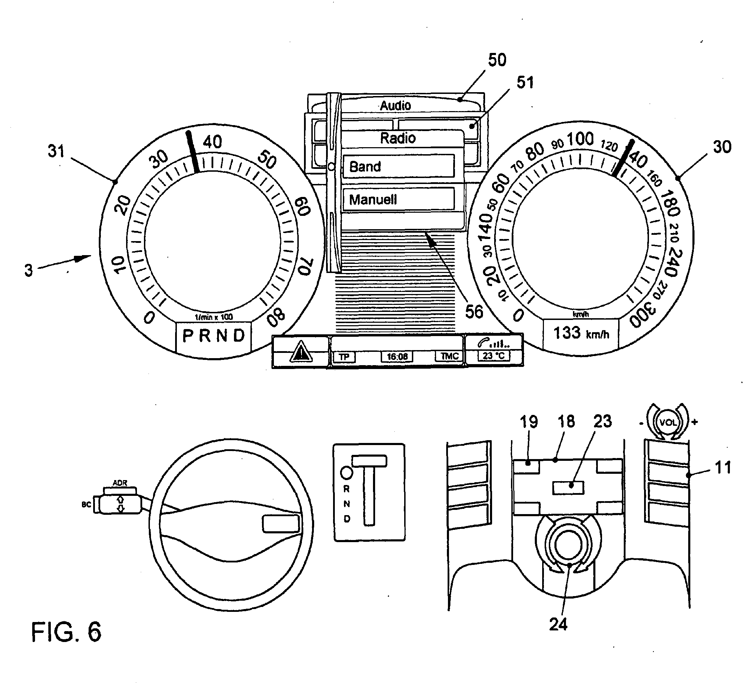

Fig. 6 entspricht der Fig. 5, d.h. das System befindet sich in der Ausführung der Hauptfunktion "Audio". Nun wurde durch Betätigung des Steuerungselements 19 der Steuerungselementkonsole 18 die Funktion "Radio" 51 betätigt. Dadurch wurde die Sender-/Medienliste 55 durch eine erste Liste 56 der verfügbaren Unterfunktionen "Band" oder "Manuell" ersetzt. Durch die Drehfunktion des Dreh-/Drückschalters 24 kann eine Auswahl und durch die Drückfunktion eine Anwahl der ausgewählten Unterfunktion getroffen werden, wodurch sich das System zur nächsttieferen Ebene der Unterfunktionen begibt. Durch Betätigung der Return-Taste 23 kehrt das System in die nächsthöhere Ebene, d.h. zur Darstellung in Fig. 5, zurück.

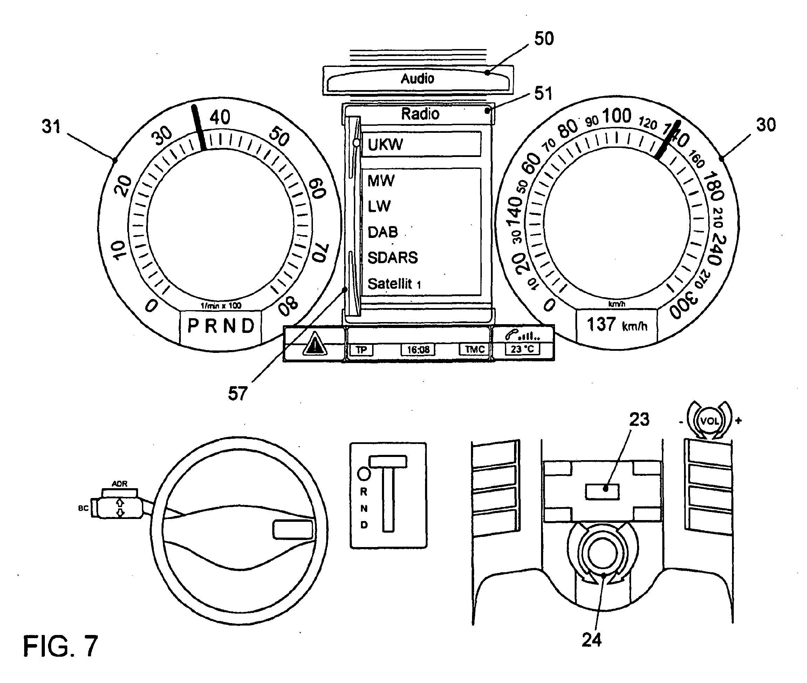

Fig.7 zeigt das Aufblenden einer weiteren Liste 57 der verfügbaren Einstellungen nach der Auswahl der Unterfunktion "Band" in der Liste 56 der verfügbaren Unterfunktionen in der ersten Unterfunktionsebene. Das System befindet sich jetzt in einer zweiten Unterfunktionsebene. Durch Betätigung des Dreh-/Drückschalters 24 kann entsprechend in der zweiten Unterfunktionsebene die gewünschte Einstellung gewählt werde. Gegebenenfalls gelangt das System auf eine weitere Unterebene. Durch Betätigung der Return-Taste 23 gelangt das System wieder in die Bedienebene der Fig. 6.

Wie in den Figuren 5 bis 7 dargestellt ist, werden in dem Fahrerinformationssystem eine oder mehrere Ebenen logisch hintereinander angeordnet oder geschachtelt, um eine komfortable Bedienung zu ermöglichen. Die Anzahl der miteinander verschachtelten Ebenen richtet sich nach der Komplexität der ausgewählten Funktion der entsprechenden Hauptfunktion.

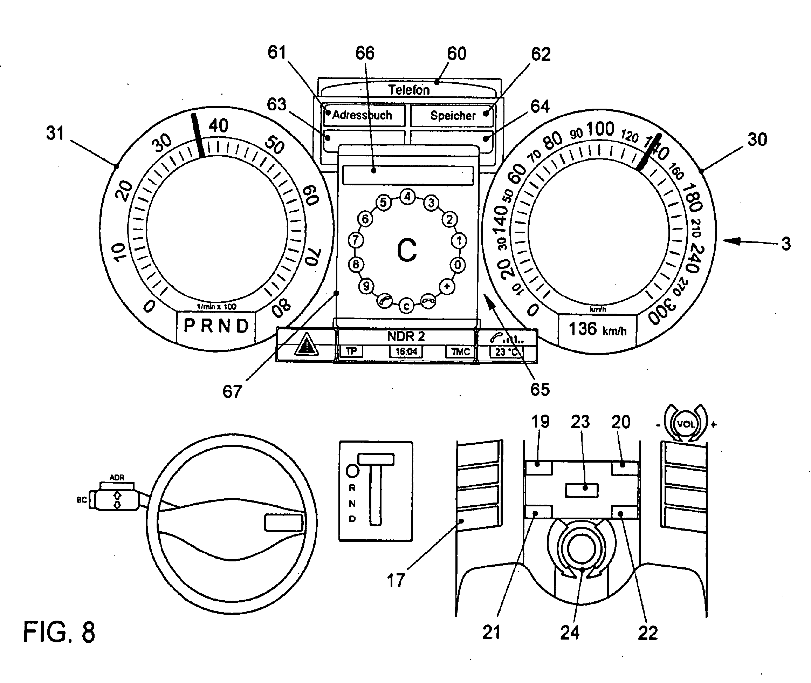

Fig. 8 schließlich zeigt als weiteres Beispiel die Darstellung nach der Wahl der Hauptfunktion "Telefon" durch Betätigung des Funktionselements 17 auf der Anzeige 3 des Fahrerinformationssystems. Die Betätigung des Funktionselements 17 führt zur Darstellung der Hauptfunktion "Telefon" 60 mit den Funktionen "Adressbuch" 61, "Speicher" 62, "Wählen" 63 und "Messaging" 64, die durch die Steuerungselemente 19 bis 22 angesprochen werden können. Die Anwahl einer Unterfunktion durch das Dreh/Drückelement 24 nach Auswahl einer der genannten Funktionen führt wieder zu dem Einblenden entsprechender Unterfunktionen, die wie in dem oben geschilderten Fall der Hauptfunktion "Audio" in Ebenen hintereinander angeordnet sind. Ferner wird ein Telefon-Bedienelement 65 aufgeblendet, das mittels des Dreh-/Drückelements 24 direkt bedienbar ist. Durch die Drehfunktion können die entsprechenden Nummern ausgewählt werden, die durch die Drückfunktion angewählt und in einem Anzeigefeld 66 angezeigt werden. Nach Auswahl der gewünschten Telefonnummer kann durch Anwahl und Auswahl des entsprechenden Symbols der Bedienscheibe 67 des Telefon-Bedienelements 65 telefoniert, die ausgewählte Nummer gelöscht oder das Telefongespräch beendet werden.

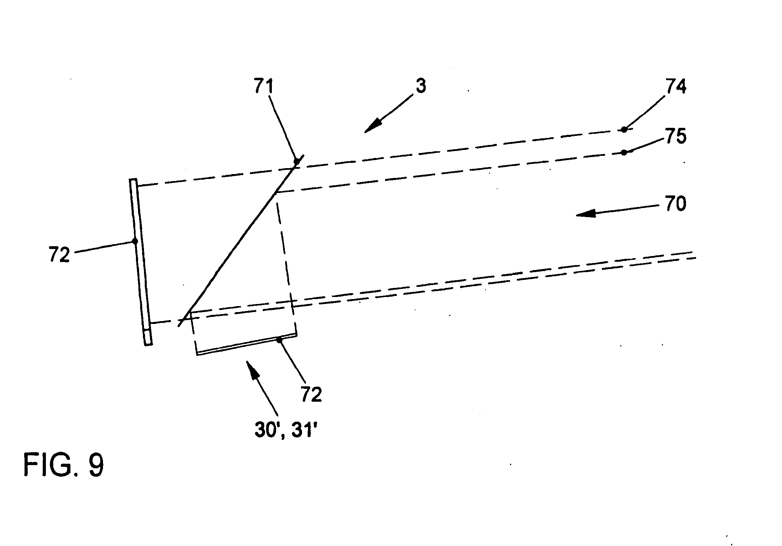

Fig. 9 zeigt die Anzeigeeinheit 3 in der bevorzugten Ausführungsform. In Blickrichtung 70 des Fahrers (nicht dargestellt) ist ein geneigter, halbdurchlässiger Spiegel 71 im Armaturenbereich (nicht dargestellt) angeordnet. Hinter dem Spiegel 71 befindet sich ein Display 72, das bei entsprechender Beleuchtungsstärke durch den Spiegel 71 hindurch für den Fahrer sichtbar ist. Unterhalb des Spiegels 71 ist die physikalische Instrumentenebene 73 angeordnet, in der in der bevorzugten Ausführungsform zwei Rundinstrumente 30' und 31' so angeordnet sind, dass sie bei Beleuchtung durch die Spiegelung für den Fahrer sichtbar sind. Die Randstrahlen 74 und 75 sollen die Zusammensetzung des für den Fahrer wahrnehmbaren Bildes verdeutlichen.

### BEZUGSZEICHENLISTE

- 1: Fahrerinformationssystem
- 2: Bedieneinheit
- 3: Anzeigeeinheit
- 4: Automatik-Schaltung
- 5: Lenkrad
- 6: Kombi-Bedienschalter
- 7: Lenkstockschalter
- 8: Bedienelement
- 9: Bedienelement
- 10: Funktionselement "direkte Kanal- und CD-Umschaltung Radio"
- 11: Funktionselement "AUDIO"
- 12: Funktionselement "VIDEO"
- 13: Funktionselement "SETUP"
- 14: Funktionselement "NAVIGATION"
- 15: Funktionselement "INFO"
- 16: Funktionselement "CAR"
- 17: Funktionselement "TELEFON"
- 18: Steuerungselementkonsole
- 19: Steuerungselement "NW"
- 20: Steuerungselement "NO"
- 21: Steuerungselement "SW"
- 22: Steuerungselement "SO"
- 23: Return
- 24: Dreh-/Drückschalter
- 25: Lautstärkeregler

- 30: Rundinstrument Geschwindigkeit, große Ausführung
- 30': Rundinstrument Geschwindigkeit, kleine randseitig angeordnete Ausführung
- 31: Rundinstrument Drehzahl, große Ausführung
- 31': Rundinstrument Drehzahl, kleine randseitig angeordnete Ausführung
- 32: Rundinstrument Zeit
- 33: Informationsleiste
- 34: mittlerer Anzeigebereich
- 35: innere Darstellungsfläche des Rundinstruments 30
- 36: innere Darstellungsfläche des Rundinstruments 31
- 37: vergrößerter mittlerer Anzeigebereich

- 40: Hauptfunktion Navigation
- 41: Funktion Karte
- 42: Anzeige Leitsystem
- 43: Anzeige Sehenswürdigkeiten
- 44: fahrzeugspezifische Anzeige
- 45: fahrerassistenzsystemspezifische Anzeige

- 50: Hauptfunktion Audio
- 51: Funktion Radio
- 52: Funktion Medien
- 53: Funktion Speicher
- 54: Funktion Klang
- 55: Senderanzeige
- 56: erste Unterfunktionsliste
- 57: zweite Unterfunktionsliste

- 60: Hauptfunktion Telefon
- 61: Adressbuch
- 62: Speicher
- 63: Wählen
- 64: Messaging
- 65: Telefon-Bedienelement
- 66: Anzeigefeld
- 67: Bedienscheibe

- 70: Blickrichtung Fahrer
- 71: halbdurchlässiger Spiegel
- 72: Display
- 73: physikalische Instrumentenebene

## Patentansprüche

1. Fahrerinformationssystem aufweisend
eine Bedieneinheit(2) mit einer Mehrzahl von Funktionselementen (10-17) zur Auswahl von Hauptfunktionen, einer Mehrzahl von Steuerungselementen (19 - 22) zur Auswahl von Funktionen einer Hauptfunktion, einem Auswahlelement (24) zur Auswahl von Unterfunktionen der Funktionen und einem Retumelement (23) zur Rückkehr zur übergeordneten Ebene; und
einer Anzeigeeinheit (3) zur graphischen Darstellung von wenigstens bedieneinheitsbezogenen Informationen, wobei
das Fahrerinformationssystem eine Mehrzahl von Darstellungsmoden zur Darstellung der angezeigten Informationen mittels der Anzeigeeinheit (3) aufweist,
jeder Darstellungsmodus eine Geschwindigkeitsanzeige (30, 30') und eine Drehzahlanzeige (31, 31') aufweist,
die Geschwindigkeitsanzeige (30, 30') und die Drehzahlanzeige (31, 31') als Rundinstrumente ausgelegt sind,
in einem als zweiten bezeichneten Darstellungsmodus zwischen den beiden Rundinstrumenten (30, 31) für Geschwindigkeit und Drehzahl mit einem erstem Durchmesser eine Anzeige der ausgewählten Hauptfunktion mit den dazu gehörigen Funktionen und notwendigen Unterfunktionen angeordnet ist, wobei
in dem Darstellungsmodus im Innern des einen Rundinstruments(31) fahrzeugrelevante Daten und im Innern des anderen Rundinstruments(30) Daten von Fahrerassistenzeinrichtungen angezeigt werden.

2. Fahrerinformationssystem nach Anspruch 1, **dadurch gekennzeichnet, dass** das System drei Darstellungsmoden aufweist.

3. Fahrerinformationssystem nach Anspruch 1 oder 2, **dadurch gekennzeichnet, dass** die Anzeigeeinheit (3) als Kombiinstrument dient.

4. Fahrerinformationssystem nach einem der vorangegangenen Ansprüche, **dadurch gekennzeichnet, dass** in einem als ersten bezeichneten Darstellungsmodus neben den Anzeigen(30, 31) für die Geschwindigkeit und Drehzahl der Darstellungsmodus eine Zeitanzeige (32) aufweist, die insbesondere in Form eines Rundinstruments ausgelegt ist.

5. Fahrerinformationssystem nach Anspruch 4, **dadurch gekennzeichnet, dass** die Zeitanzeige (32) zwischen den Anzeigen (30, 31) für Geschwindigkeit und Drehzahl angeordnet ist.

6. Fahrerinformationssystem nach Anspruch 5, **dadurch gekennzeichnet, dass** in dem weiteren Darstellungsmodus die Rundinstrumente (30, 31) für Drehzahl und Geschwindigkeit einen gemeinsamen ersten Durchmesser aufweisen, der größer ist als der Durchmesser der Zeitanzeige (32) in Form eines Rundinstruments.

7. Fahrerinformationssystem nach einem der vorangegangenen Ansprüche, **dadurch gekennzeichnet, dass** in einem dritten Darstellungsmodus die Rundinstrumente (30', 31') für Geschwindigkeit und Drehzahl einen zweiten Durchmesser aufweisen, der kleiner als der erste Durchmesser ist und die beiden Rundinstrumente (30, 31) jeweils am Rand des sichtbaren Bereichs der Anzeigeeinheit (3) angeordnet sind und zwischen den beiden Rundinstrumenten (30, 31) eine Anzeige der ausgewählten Hauptfunktion mit den dazu gehörigen Funktionen und notwendigen Unterfunktionen angeordnet ist.

8. Fahrerinformationssystem nach einem der vorangegangenen Ansprüche **dadurch gekennzeichnet, dass** ein Kombi-Bedienelenient (6) zur Umschaltung zwischen mindestens zwei Darstellungsmoden vorgesehen ist.

9. Fahrerinformationssystem nach Anspruch 8, **dadurch gekennzeichnet, dass** das Kombl-Bedienetemeht (6) zwischen dem zweiten und dritten Darstellundsmödus umschaltet.

10. Fahrerinformationssystem nach Anspruch 8. **dadurch gekennzeichneit, dass** das Kombi-Bedienelement (6) zwischen sämtlichen Darstellungsmoden umschaltet.

11. Fahrerinformationssystem nach einem der vorangegangenen Ansprüche, **dadurch gekennzeichnet, dass** das System acht Funktionselemente ((10-17) für maximal acht Hauptfunktionen aufweist, wobei jeder Hauptfunktion maximal 4 Funktionen untergeordnet sind, und vier Steuerungselemente (10- 22) aufweist, wobei die Steuerungselemente (10 - 22) mit den Funktionen der ausgewählten Hauptfunktion belegt sind.

12. Fahrerinformattohssystem nach Anspruch 11, **dadurch gekennzeichnet, dass** das System 7 Hauptfunktionen mit jeweils 4 Funktionen aufweist.

13. Fahrerinformationssystem nach Anspruch 12, **dadurch gekennzeichnet, dass** die Hauptfunktionen gebildet werden durch die Elemente "Navigation", "Information", "Fahrzeug", "Telefon", "Audio", "Video" und "Einstellungen".

14. Fahrerinformationssystem nach einem der vorangegangenen Anspruche, **dadurch gekennzeichnet, dass** das Auswahlelement (24) durch einen Dreh-/Druckschalter gebildet wird.

15. Fahrerinformationssystem nach einem der vorangegangenen Anspruche**, dadurch gekennzeichnet, dass** die Steuerungselemente (19 - 22) durch ein Touchpad mit einer Mehrzahl von Bereichen gebildet sind.

16. Fahrerinformationssystem nach einem der vorangegangenen Ansprüche, **dadurch gekennzeichnet, dass** die Funktionselemente (10-17) und/oder die Steuerungselemente (19- 22) Näherungssensoren aufweisen, so dass bei einer Annäherung an ein Funktionselement die entsprechende Hauptfunktion in der Anzeige dargestellt wird, bzw. dass bei einer Anräherung an ein Steuerungselement die entsprechende Funktion mit ihren Unterfunktionen eingeblendet wird.

17. Fahrerinformationssystem nach einem der vorangegangenen Ansprüche, **dadurch gekennzeichnet, dass** die Funktionselemente (10-17) und/oder die Steuerungselemente (19 - 22) berührungssensitive Sensoren, insbesondere kapazitive Sensoren, aufweisen, so dass bei einer Berührung eines Funktionselements die entsprechende Hauptfunktion in der Anzeige dargestellt wird, bzw. dass bei einer Berührung eines Steuerungselement die entsprechende Funktion mit ihren Unterfunktionen eingeblendet wird.

18. Fahrerinformationssystem nach einem der vorangegangenen Ansprüche, **dadurch gekennzeichnet, dass** das System mindestens eine weitere, durch einen Monitor gebildete Anzeigeeinheit aufweist.

19. Fahrerinformationssystem nach einem der vorangegangenen Ansprüche, **dadurch gekennzeichnet, dass** die Anzeigeeinheit einen unter einem Winkel angeordneten halbdurchlässigen Spiegel aufweist, wobei in Blickrichtung des Fahrers hinter dem halbdurchlässigen Spiegel ein Display angeordnet ist und in der gespiegelten Blickrichtung des Fahrers physikalische Rundinstrumente (30', 31') für Drehzahl und Geschwindigkeit angeordnet sind.

20. Fahrerinformationssystem nach Anspruch 19, **dadurch gekennzeichnet, dass** die physikalischen Rundinstrumente (30', 31') unterhalb des geneigten halbdurchlässigen Spiegels angeordnet sind.

21. Fahrerinformationssystem nach einem der Ansprüche 19 oder 20, **dadurch gekennzeichnet, dass** die physikalischen Rundinstrumente (30', 31') den zweiten Durchmesser aufweisen und so angeordnet sind, dass sie am Rand des für den Fahrer sichtbaren Anzeigebereichs eingespiegelt werden

22. Fahrerinformationssystem nach Anspruch 21, **dadurch gekennzeichnet, dass** die physikalischen Rundinstrumente (30', 31') mit einer Beleuchtungseinrichtung versehen sind.

23. Fahrerinformationssystem nach Anspruch 22, **dadurch gekennzeichnet, dass** die Beleuchtung der physikalischen Rundinstrumente (30', 31') nur im dritten Darstellungsmodus eingeschaltet ist, wodurch die seitlichen angeordneten Rundinstrumente mit zweitem Durchmesser für den Fahrer sichtbar sind.

## Claims

1. Driver information system having
an operator control unit (2) with a plurality of function elements (10-17) for selecting main functions, a plurality of control elements (19-22) for selecting functions of a main function, a selection element (24) for selecting subfunctions of the functions and a return element (23) for returning to the superordinate level; and
a display unit (3) for graphically displaying at least information relating to the operator control unit, wherein
the driver information system has a plurality of display modes for displaying the displayed information by means of the display unit (3),
each display mode has a velocity display (30, 30') and a rotational speed display (31, 31'),
the velocity display (30, 30') and the rotational speed display (31, 31') are embodied as round instruments,
a display of the selected main function with the associated functions and necessary subfunctions is arranged in a display mode, referred to as a second display mode, between the two round instruments (30, 31') for velocity and rotational speed with a first diameter, wherein vehicle-related data are displayed in the display mode in the interior of one (31) of the round instruments and data relating to driver assistance devices are displayed in the interior of the other round instrument (30).

2. Driver information system according to Claim 1, **characterized in that** the system has three display modes.

3. Driver information system according to Claim 1 or 2, **characterized in that** the display unit (3) serves as a combination instrument.

4. Driver information system according to one of the preceding claims, **characterized in that** in a display mode which is referred to as a first display mode, in addition to the displays (30, 31) for the velocity and rotational speed there is a time display (32) which is configured in particular in the form of a round instrument.

5. Driver information system according to Claim 4, **characterized in that** the time display (32) is arranged between the displays (30, 31) for the velocity and rotational speed.

6. Driver information system according to Claim 5, **characterized in that** in the further display mode the round instruments (30, 31) for the rotational speed and velocity have a common first diameter which is larger than the diameter of the time display (32) in the form of a round instrument.

7. Driver information system according to one of the preceding claims, **characterized in that** in a third display mode the round instruments (30' 31') for the velocity and rotational speed have a second diameter which is smaller than the first diameter, and the two round instruments (30, 31) are arranged in each case at the edge of the visible region of the display unit (3), and a display of the selected main functions with the associated functions and necessary subfunctions is arranged between the two round instruments (30, 31).

8. Driver information system according to one of the preceding claims, **characterized in that** a combination operator control element (60) for switching between at least two display modes is provided.

9. Driver information system according to Claim 8, **characterized in that** the combination operator control element (6) switches over between the second and third display modes.

10. Driver information system according to Claim 8, **characterized in that** the combination operator control element (6) switches between all the display modes.

11. Driver information system according to one of the preceding claims, **characterized in that** the system has eight function elements (10-17) for a maximum of eight main functions, wherein a maximum of four functions are subordinated to each main function, and each main function has four control elements (10-22), wherein the control elements (10-22) have the functions of the selected main function assigned to them.

12. Driver information system according to Claim 11, **characterized in that** the system 7 has main functions each with four functions.

13. Driver information system according to Claim 12, **characterized in that** the main functions are formed by the elements of "navigation", "information", "vehicle", "telephone", "audio", "video" and "settings".

14. Driver information system according to one of the preceding claims, **characterized in that** the selection element (24) is formed by a rotary/pushbutton switch.

15. Driver information system according to one of the preceding claims, **characterized in that** the control elements (19-22) are formed by a touch pad with a plurality of regions.

16. Driver information system according to one of the preceding claims, **characterized in that** the function elements (10-17) and/or the control elements (19-22) have proximity sensors so that when a function element is approached the corresponding main function is displayed on the display, or that when a control element is approached the corresponding function with its subfunctions is input into the display.

17. Driver information system according to one of the preceding claims, **characterized in that** the function elements (10-17) and/or the control elements (19-22) have touch-sensitive sensors, in particular capacitive sensors, so that when a function element is touched the corresponding main function is displayed on the display, or that when a control element is touched the corresponding function with its subfunctions is input into the display.

18. Driver information system according to one of the preceding claims, **characterized in that** the system has at least one further display unit which is formed by a monitor.

19. Driver information system according to one of the preceding claims, **characterized in that** the display unit has a semi-transparent mirror which is arranged at an angle, wherein a display is arranged behind the semi-transparent mirror in the viewing direction of the driver and physical round instruments (30', 31') for the rotational speed and velocity are arranged in the reflected viewing direction of the driver.

20. Driver information system according to Claim 19, **characterized in that** the physical round instruments (30', 31') are arranged underneath the inclined semi-transparent mirror.

21. Driver information system according to one of Claims 19 or 20, **characterized in that** the physical round instruments (30', 31') have the second diameter and are arranged in such a way that they are reflected into the edge of the display regions which are visible to the driver.

22. Driver information system according to Claim 21, **characterized in that** the physical round instruments (30', 31') are provided with an illumination device.

23. Driver information system according to Claim 22, **characterized in that** the illumination of the physical round instruments (30', 31') is switched on only in the third display mode, as a result of which the lateral, arranged round instruments with the second diameter can be seen by the driver.

## Revendications

1. Système d'information d'un conducteur, qui présente :
une unité de commande (2) qui présente plusieurs éléments fonctionnels (10 - 17) qui permettent de sélectionner des fonctions principales, plusieurs éléments de commande (19 - 22) qui permettent de sélectionner des fonctions d'une fonction principale, un élément de sélection (24) qui permet de sélectionner des sous-fonctions des fonctions et un élément de retour (23) qui permet de revenir au niveau supérieur et
une unité d'affichage (3) qui représente graphiquement au moins les informations appelées par l'unité de commande,
le système d'information du conducteur présentant plusieurs modes de présentation qui permettent de présenter les informations affichées au moyen de l'unité d'affichage (3),
chaque mode de représentation présentant un affichage (30, 30') de la vitesse et un affichage (31, 31') du régime moteur,
l'affichage (30, 30') de la vitesse et l'affichage (31, 31') du régime moteur étant conçus sous la forme de cadrans circulaires,
un affichage de la fonction principale sélectionnée et des fonctions qui lui appartiennent ainsi que des sous-fonctions nécessaires étant disposé dans un mode de présentation appelé deuxième mode entre les deux cadrans circulaires (30, 31) prévus respectivement pour la vitesse et le régime moteur à un premier diamètre,
des données concernant le véhicule étant affichées en mode de présentation à l'intérieur d'un des cadrans circulaires (31) et les données des dispositifs d'assistance au conducteur étant affichées à l'intérieur de l'autre cadran circulaire (30).

2. Système d'information du conducteur selon la revendication 1, **caractérisé en ce que** le système présente trois modes de présentation.

3. Système d'information du conducteur selon les revendications 1 ou 2, **caractérisé en ce que** l'unité d'affichage (3) sert d'instrument combiné.

4. Système d'information du conducteur selon l'une des revendications précédentes, **caractérisé en ce qu'**en plus des affichages (30, 31) de la vitesse et du régime moteur, un mode de présentation appelé premier mode de présentation présente un affichage (32) de l'heure conçu en particulier sous la forme d'un cadran circulaire.

5. Système d'information du conducteur selon la revendication 4, **caractérisé en ce que** l'affichage (32) de l'heure est disposé entre les affichages (30, 31) de la vitesse et du régime moteur.

6. Système d'information du conducteur selon la revendication 5, **caractérisé en ce que** dans l'autre mode de présentation, les cadrans circulaires (30, 31) prévus pour le régime moteur et la vitesse ont un premier diamètre commun plus grand que le diamètre de l'affichage (32) de l'heure sous la forme d'un cadran circulaire.

7. Système d'information du conducteur selon l'une des revendications précédentes, **caractérisé en ce que** dans un troisième mode de présentation, les cadrans circulaires (30', 31') de la vitesse et du régime moteur ont un deuxième diamètre plus petit que le premier diamètre, les deux cadrans circulaires (30, 31) étant chacun disposé sur le bord de la partie visible de l'unité d'affichage (3) et un affichage de la fonction principale sélectionnée ainsi que des fonctions qui lui appartiennent et des sous-fonctions nécessaires étant disposé entre les deux cadrans circulaires (30, 31).

8. Système d'information du conducteur selon l'une des revendications précédentes, **caractérisé en ce qu'**un élément combiné de commande (6) est prévu pour basculer entre au moins deux modes de présentation.

9. Système d'information du conducteur selon la revendication 8, **caractérisé en ce que** l'élément combiné de commande (6) permet de basculer entre le deuxième et le troisième mode de présentation.

10. Système d'information du conducteur selon la revendication 8, **caractérisé en ce que** l'élément combiné de commande (6) permet de basculer entre tous les modes de présentation.

11. Système d'information du conducteur selon l'une des revendications précédentes, **caractérisé en ce que** le système présente huit éléments fonctionnels (10 - 17) pour au plus huit fonctions principales, au plus 4 fonctions étant subordonnées à chaque fonction principale, et **en ce qu'**il présente quatre éléments de commande (10 - 22), les éléments de commande (10 - 22) étant occupés par les fonctions de la fonction principale sélectionnée.

12. Système d'information du conducteur selon la revendication 11, **caractérisé en ce que** le système présente 7 fonctions principales dotées chacune de 4 fonctions.

13. Système d'information du conducteur selon la revendication 12, **caractérisé en ce que** les fonctions principales sont formées par les éléments "navigation", "information", "véhicule", "téléphone", "audio", "vidéo" et "réglages".

14. Système d'information du conducteur selon l'une des revendications précédentes, **caractérisé en ce que** l'élément de sélection (24) est formé d'un commutateur rotatif ou à poussoir.

15. Système d'information du conducteur selon l'une des revendications précédentes, **caractérisé en ce que** les éléments de commande (19 - 22) sont formés par un clavier tactile doté de plusieurs parties.

16. Système d'information du conducteur selon l'une des revendications précédentes, **caractérisé en ce que** les éléments fonctionnels (10 - 17) et/ou les éléments de commande (19 - 22) présentent des sondes de proximité de telle sorte que lorsqu'un élément fonctionnel est approché, la fonction principale correspondante est présentée dans l'affichage et **en ce que** lorsqu'un élément de commande est approché, la fonction correspondante est affichée avec ses sous-fonctions.

17. Système d'information du conducteur selon l'une des revendications précédentes, **caractérisé en ce que** les éléments fonctionnels (10 - 17) et/ou les éléments de commande (19 - 22) présentent des détecteurs tactiles et en particuliers de détecteurs capacitifs de telle sorte que lorsqu'un élément fonctionnel est touché, la fonction principale correspondante est présentée sur l'affichage et **en ce que** lorsqu'un élément de commande est touché, la fonction correspondante est insérée dans l'affichage avec ses sous-fonctions.

18. Système d'information du conducteur selon l'une des revendications précédentes, **caractérisé en ce que** le système présente au moins une autre unité d'affichage formée par un écran.

19. Système d'information du conducteur selon l'une des revendications précédentes, **caractérisé en ce que** l'unité d'affichage présente un miroir semi-transparent disposé obliquement, un affichage étant disposé derrière le miroir semi-transparent dans la direction d'observation du conducteur et des cadrans circulaires physiques (30', 31') prévus respectivement pour le régime moteur et la vitesse sont disposés dans la direction d'observation réfléchie du conducteur.

20. Système d'information du conducteur selon la revendication 19, **caractérisé en ce que** les cadrans circulaires physiques (30', 31') sont disposés en dessous du miroir semi-transparent incliné.

21. Système d'information du conducteur selon l'une des revendications 19 ou 20, **caractérisé en ce que** les cadrans circulaires physiques (30', 31') présentent le deuxième diamètre et sont disposés de manière à être réfléchis sur le bord de la zone de l'affichage visible par le conducteur.

22. Système d'information du conducteur selon la revendication 21, **caractérisé en ce que** les cadrans circulaires physiques (30', 31') sont dotés d'un dispositif d'éclairage.

23. Système d'information du conducteur selon la revendication 22, **caractérisé en ce que** l'éclairage des cadrans circulaires physiques (30', 31') n'est branché que dans le troisième mode de présentation, les cadrans circulaires du deuxième diamètre disposés latéralement étant visibles par le conducteur.
